# EUROPÄISCHE PATENTSCHRIFT

(11) **EP 1 104 598 B1**
(45) Veröffentlichungstag und Bekanntmachung des Hinweises auf die Patenterteilung: **07.08.2002**
(21) Anmeldenummer: 99952256.8
(22) Anmeldetag: 30.07.1999
(51) Int. Cl.: H04B 7/185

(54) **ZUSTELLUNG ABGEFORDERTER VIDEOSEQUENZEN ÜBER SATELLITEN**
DISTRIBUTION OF REQUESTED VIDEO SEQUENCES VIA SATELLITES
DISTRIBUTION PAR SATELLITE DE SEQUENCES VIDEO

(30) Priorität: 13.08.1998 DE 29814544 U
(43) Veröffentlichungstag der Anmeldung: 06.06.2001
(73) Patentinhaber: CM Community Media GmbH & Co KG, 50670 Köln (DE)
(72) Erfinder: GEILING, Reinhold, D-51143 Köln (DE); BERTONI, Alain, D-50672 Köln (DE); METTLER, Johannes, D-81545 München (DE)
(74) Vertreter: Kreutzer, Ulrich, Dipl.-Phys.
(86) Internationale Anmeldenummer: DE9902394
(87) Internationale Veröffentlichungsnummer: WO0010262

(56) Entgegenhaltungen:
- EP-A- 0 804 028
- WO-A-97/20413
- WO-A-97/50250
- MORRIS, O.J.: "MPEG-2: where did it come from and what is it?" THE INSTITUTION OF ELECTRICAL ENGINEERS, IEE COLLOQUIUM ON MPEG-2 - WHAT IT IS AND WHAT IT ISN'T,1995, Seiten 1/1-1/5, XP002128259

## Beschreibung

Die Erfindung bezeichnet die Zustellung abgeforderter Videosequenzen über Satelliten, insbesondere von Musikvideoclips, in professioneller Bildqualität an Empfänger zur vorzugsweisen Nutzung in dazu berechtigten Discotheken. Dabei soll insbesondere der Schutz gegen unberechtigte Vervielfältigung und Nutzung gewahrt bleiben.

In der Internationalen Patentklassifikation (IPC) ist die elektrische Nachrichtenübertragung in der Klasse H04B eingeordnet. Rundfunkverteilungssysteme als solche werden in der Klasse H04H 1/00 erfaßt, die über Satelliten speziell in H04B 7/185. Die Bildübertragung ist in der Klasse H04N und speziell die für Farbfernsehsysteme in H04N 11/00, HDTV (High-Definition Television) in H04N 11/24 eingeordnet. Ein Zweiwegbetrieb, bei welchem der Empfänger ein Programmwählsignal sendet, ist in H04 7/173 erfaßt. Die Übertragung digitaler Informationen wird in der Klasse H04L und spezielle Anordnungen für den zugriffsgesicherten Nachrichtenverkehr werden in der Klasse H04L 9/00, speziell Mittel zur Festlegung der Berechtigung zum Empfang in H04L 9/32 und zur blockweisen Kodierung/Dekodierung der Information in H04L 9/06 erfaßt.

Videosequenzen, insbesondere Musikvideoclips, besitzen in der Regel einen urheberrechtlichen Schutz, welcher insbesondere die unberechtigte Vervielfältigung untersagt. Bei der Distribution derartiger Videosequenzen ist daher sicherzustellen, daß eine unberechtigte weitere Vervielfältigung nicht unterstützt wird, was beispielsweise durch Maßnahmen zum Kopierschutz erzielt wird.

Es ist bspw. aus der Druckschrift DE4418191 vorbekannt, entsprechend digitalisierte Videobilder über Telefonleitungen zu übertragen. Nachteilig bei derartigen Verfahren ist der durch die begrenzte Bandbreite der Übertragungsstrecke bzw. die begrenzte Bildauflösung bedingte Qualitätsverlust. Des weiteren ist durch die notwendige Point to Point Verbindung keine Zustellung an mehrere Empfänger gleichzeitig möglich.

Zur digitalen Videoübertragung und/oder Speicherung wird derzeit üblicherweise MPEG (Moving Pictures Experts Group) benutzt, welches einen Satz mit Standards für die Komprimierung von Audio- und Video-Daten definiert. MPEG ist außerdem die Kurzform für eine Video-/Audio-Datei im MPEG-Format Für unterschiedliche Anwendungen bzw. Anforderungen an die Qualität der Videoinformation sind unterschiedliche Komprimierungsarten festgelegt. MPEG-1 definiert als der ursprüngliche MPEG-Standard für das Speichern und Abrufen von Video- und Audio-Informationen, der für die CD-ROM-Technologie entwickelt wurde, eine mittlere Bandbreite von bis zu 1,5 Mbps, zwei Audio-Kanäle sowie zeilensprungfreies Video. MPEG-2 definiert als eine Erweiterung des MPEG-1 Standards, der für die Komprimierung qualitativ höherwertiger Videosignale sowie für die Fernsehübertragung in HDTV entwickelt wurde, eine höhere Bandbreite von bis zu 40 Mbps, fünf Audio-Kanäle, ein breiteres Spektrum an Bildgrößen sowie Video mit Zeilensprung. Ein speziell für MPEG-2 optimierter, schneller Chiffrieralgorithmus ist beschrieben, der eine Ver- und Entschlüsselung und Überprüfung des kompletten Datenstroms ermöglicht.

Die Druckschrift DE19643672 offenbart ein Verfahren zum Decodieren eines Videobitstroms nach dem MPEG Standard, wobei jeweils aufeinanderfolgend ein I-Bild und ein P-Bild zwischengespeichert werden. Dabei muß während der gesamten Zeitspanne der Videobitstrom kontinuierlich in der erforderlichen Bandbreite zur Verfügung stehen, also als Livedaten vorliegen.

ADR-Hörfunkprogramme (ASTRA digital radio) ermöglichen die Übertragung von digitalen Daten über einen Satelliten. Die European Satellite Multimedia Services S.A. ermöglicht mit einen kontinuierlichen Datenstrom hoher Bandbreite ihren Dienst ASTRA-NET ein DVB (digital video broadcasting) nach dem MPEG-2 Standard. Des weiteren wird für die diskontinuierliche Dateiübertragung bei geringerer Bandbreite mit package delivery die paketvermittelte Übertragung digitaler Daten entsprechend des Internetprotokolls unterstützt. Die Standards für die Paketübermittlung in Netzwerken sind in der CCITT-Empfehlung X.25 dokumentiert.

Die Druckschrift DE29800778 offenbart eine Anordnung zur Übertragung von digitalen Daten im MPEG Format über einen Satelliten im Rahmen eines ADR-Hörfunkprogrammes, bei denen dem Satellitenempfänger nach der PSK-Demodulation (phaseshift keying) unmittelbar ein MPEG-Decodierer zugeordnet ist, der die kontinuierlich übertragene Videosequenz bereitstellt. Nachteilig bei dieser Lösung ist die Notwendigkeit von Livedaten bzw. eine kontinuierliche Breitbandübertragung.

Die Druckschrift DE29603829 offenbart eine interaktive Übertragung und Wiedergabe von Videodateien im MPEG-Format, wobei auf Anforderung eine Datenfernübertragungsstrecke zwischen einem Datei-Server und einem Wiedergaberechner besteht, welcher mit einer MPEG-Datei Abspieleinrichtung versehen ist. Nachteilig bei dieser Realisierung ist, daß nicht mehrere Empfänger gleichzeitig die gesendete Videodatei empfangen können. Ebenso ist die fehlende Sicherheit gegenüber einer unberechtigten Vervielfältigung nachteilig.

Ein System zur schnellen Datenübertragung mittels Telefonund Satellitenübetragung in einem weltweiten Datennetzwerk wird in der Druckschrift WO 97/20413 beschrieben. Hierbei werden aus Informationen, die durch eine Vielzahl von Empfängern über ein Netzwerk, vorzugsweise Internet, abgefordert wurden, Datenpakete in Übereinstimmung mit dem Netzwerkprotokoll mit der Empfängeradresse gebildet. Aus den Datenpaketen wird mittels eines Multiplexverfahrens ein digitaler Datenstrom (MPEG-kodiert) generiert und an die Vielzahl der Empfänger über Satellit gesendet, wobei vom einzelnen Empfänger nur der Teil interpretiert wird, der mit seiner Adresse übereinstimmt. Die übertragenen Daten können zudem spezifisch für jeden Empfänger verschlüsselt sein und der Empfänger entschlüsselt nur die für ihn bestimmten Daten.

Ein prinzipiell ähnliches System beschreibt auch die Druckschrift WO97/50250. Für ein Near Video on Demand - System wird ein Pool von Programmmaterial bereitgehalten, das über Satellit an eine Vielzahl von Empfängern kodiert übertragen wird. Die Header der Übertragungen beinhalten Informationen mit deren Hilfe individuell interessierende Programme manuell oder mit Hilfe einer lernfähigen Software ausgewählt und in einem Massenspeicher abgelegt werden können.

Beiden Systemen gemeinsam ist die fehlende Sicherheit vor unberechtigter Vervielfältigung und Nutzung der an den jeweiligen Empfänger adressiert übertragenen Daten nach deren Empfang sowie gegebenenfalls deren Speicherung.

Die Aufgabe der Erfindung besteht in der einfachen Realisierung einer sicheren Zustellung abgeforderter Videosequenzen in professioneller Qualität an einzelne berechtigte Empfänger bei geringer Belastung der Übertragungsstrecke und damit geringen Übertragungskosten.

Die Aufgabe wird durch die im Patentanspruch 1 aufgeführten Merkmale gelöst. Bevorzugte Weiterbildungen ergeben sich aus den Unteransprüchen.

Das Wesen der Erfindung besteht in der Zustellung von angeforderten Videosequenzen mittels des speziell für die Komprimierung qualitativ höherwertiger Videosignale entwickelten MPEG-2 Standards zur Gewährleistung einer professionellen Bildqualität an einen über seine empfängerspezifische Identifizierung berechtigten Empfänger als MPEG-2-File unter Zwischenschaltung einer satellitengestützten paketvermittelten Datenübertragung.
Ein weiterer wesentlicher Aspekt besteht in der Realisierung einer nur dem berechtigten Empfänger möglichen Echtzeitdekodierung dieses MPEG-2-Files. Dies kann durch eine Ver-/Entschlüsselung des MPEG-2-Files durch einen videodienstleisterspezifischen Schlüssel in Echtzeit erfolgen, ohne unverschlüsselte Videosequenzen zu speichern. In der vorteilhaften Ausführung wird der zur Ver-/Entschlüsselung und Überprüfung des kompletten Datenstroms im MPEG-2 Standard beschriebene spezielle Chiffrieralgorithmus zur Echtzeitentschlüsselung benutzt.
Es ist vorstellbar die angeforderten Videosequenzen gekoppelt mit Commercials zu übertragen.
Des Weiteren ist es möglich, einer individuellen Programmzusammenstellung aus Videosequenzen durch den Empfänger dynamisch Commercials nach Vorgaben des Videodienstleisters in Abhängigkeit von der Programmdauer automatisch für die Wiedergabe anzuordnen.

Die Vorteile der Erfindung bestehen insbesondere in der Möglichkeit,
- nach Ansicht des Inhalts der Videosequenzen, welche vorteilhaft über das Netz im MPEG-1-Format auf den Rechner zur Vorschau übertragen wurden, eine individuelle Auswahl der Videosequenzen zu treffen und diese individuell zu bestellen,
- die abgeforderten Videosequenzen über eine kostengünstige Übertragungsstrecke dem Empfänger in höchster Qualität bereitzustellen,
- über die Direct-Broadcast-Verbindung durch mehrere Empfänger gleichzeitig Videosequenzen empfangen zu können,
- diese Videosequenzen beim Empfänger frei verfügbar zu halten, wodurch dieser sein eigenes Programm erstellen kann,
- einer individuellen Wiedergabe der Videosequenzen,
- eine unberechtigte Vervielfältigung und Nutzung der Videosequenzen auszuschließen,
- der dynamischen, automatisch pro Programmzusammenstellung erfolgenden Einordnung und Wiedergabe von Commercials.

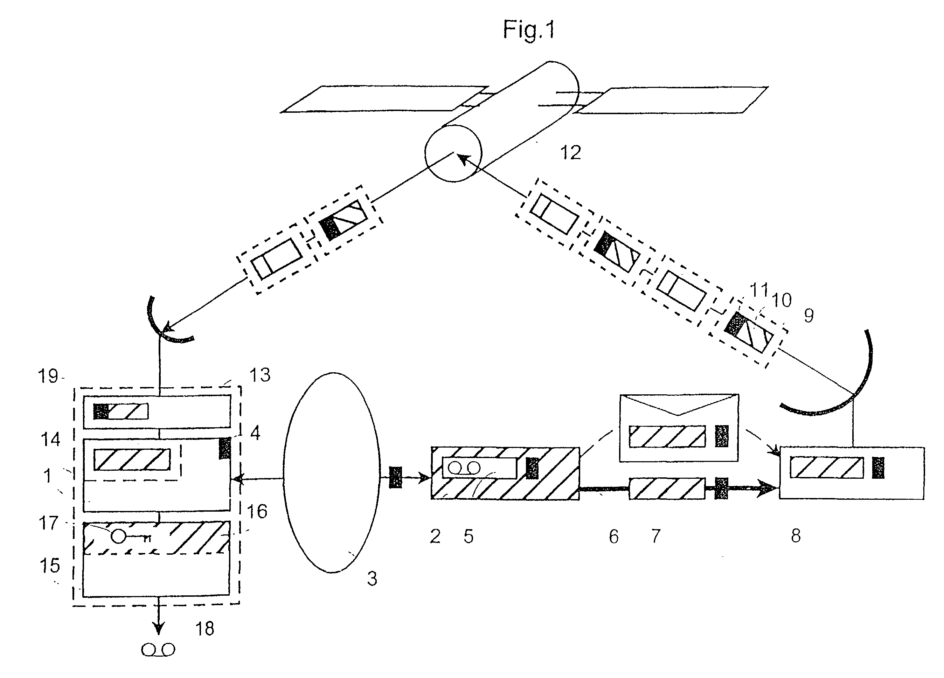

Die Erfindung wird als Ausführungsbeispiel an Hand von Fig. 1 als Anordnung zur Zustellung von Videosequenzen näher erläutert.

Nach Fig. 1 besteht zwischen einem Rechner 1 eines Empfängers und einem Videodienstleister 2 eine Datenverbindung über ein Netz 3, bspw. das Internet, über welche der über eine empfängerspezifische Identifizierung 4 berechtigte Empfänger aus dem Angebot des Videodienstleisters 2 einzelne Videosequenzen 5, bspw. Musicvideoclips, auswählt und anfordert, vorteilhaft nach Ansicht des Inhalts der Videosequenzen, welche zur Vorschau über das Netz 3 im MPEG-1 Standard auf den Rechner 1 übertragen wurden. Zum Abschluß des Bestellvorgangs wird vorteilhaft die freie Speicherkapazität beim Rechner 1 des Empfängers geprüft und der für den Empfang der Videosequenz 5 erforderliche Speicherplatz reserviert. Bei zu geringer Speicherkapazität sind übliche Prozeduren zur Freigabe von fehlender Speicherkapazität durchzuführen. Der Videodienstleister 2, welcher die einzelnen Anforderungen verschiedener Empfänger sammelt und vorzugsweise geeignet gruppiert, stellt die Videosequenzen 5 - optional über eine Breitbandverbindung 6 mit der für die Übertragung im MPEG-2 erforderlichen Bandbreite - in Form eines MPEG-2-Files 7 einem Satellitensender 8 zur Verfügung, der die Videosequenz 5 in einzelne Pakete 9 mit den aus Teilen des MPEG-2-Files 7 bestehenden Daten 10 und Kopfinformationen 11 zerlegt und - vorzugsweise durch eine Übertragungsverschlüsselung mit DES 56BIT (Data Encryption Standard) gesichert - über einen zwischengeschalteten Satelliten 12 unter anderem zu einem Satellitenempfänger 13 überträgt, welcher mit dem Rechner 1 verbunden ist, der die Daten 10 auf einer Speichereinheit 14 ablegt. Dabei stellt der Satellitenempfänger 13 jeweils über die Kopfinformation 11 und die empfängerspezifische Identifizierung 4 des Rechners 1 sicher, daß nur der Rechner 1 die Daten 10 auf der Speichereinheit 14 ablegt, für den diese bestimmt sind. Nach erfolgreicher Übertragung, Speicherung und Verknüpfung der Daten 10 aller Pakete 9 liegt das MPEG-2-File 7 auf der Speichereinheit 14 vor. Zur Gewährleistung des Schutzes gegen unberechtigte Vervielfältigung beinhaltet das MPEG-2-File 7 die Videosequenz 5 in einer verschlüsselten Form. Die Wiedergabe der Videosequenz 5 aus dem MPEG-2-File 7 mittels eines dem Rechner 1 zugeordneten MPEG-2-Decoders 15 ist somit nur unter Benutzung einer videodienstleisterspezifischen Wiedergabesoftware 16 möglich, welche unter Verwendung des temporären Speichers im Rechner 1 und des MPEG-2-Decoders 15 die Entschlüsselung und Dekodierung der Videosequenz 5 in Echtzeit vornimmt und diese schließlich als Videosignal 18 ausgibt ohne unverschlüsselte Videosequenzen 5 zu speichern. Da die Videosequenz 5 nur in Echtzeit als Videosignal 18 am Ausgang des MPEG-2-Decoders 15 vorliegt, wird eine unberechtigte Vervielfältigung und Nutzung dieser nicht unterstützt. Der für die Entschlüsselung der Videosequenz 5 notwendige Schlüssel 17 ist vorzugsweise als updatefähiger Teil in die videodienstleisterspezifische Wiedergabesoftware 16 integriert, wobei dieser vorzugsweise für alle berechtigten Empfänger gleich ist. Es ist vorteilhaft, zur Entschlüsselung den im MPEG-2-Standard zur Verschlüsselung und Überprüfung des kompletten Datenstroms optimierten, schnellen Chiffrieralgorithmus zu verwenden, bspw. den bei der DVD (digitale Videodisk) benutzten Algorithmus.

Es ist jedoch denkbar und ebenso im Sinne der Erfindung, zur Ver- bzw. Entschlüsselung ein Public-Key-Verfahren anzuwenden, wobei der zur Echtzeitentschlüsselung der Videosequenz 5 notwendige Schlüssel 17 erst aus der empfängerspezifischen Identifizierung 4 berechnet wird und ausschließlich temporär vorliegt. Ebenfalls ist es vorteilhaft denkbar, den MPEG-2-Decoder 15 derart zu spezifizieren, daß bezüglich des Monitorsignals des Rechners 1 eine Entkopplung der Ausgabe der Videosequenz 5 als Videosignal 18 möglich ist, wodurch die Wiedergabe der Videosequenz 5 als Videosignal 18 in der Art einer Hintergrundanwendung ermöglicht wird. Ebenso ist es vorstellbar, auf den Videoausgang des MPEG-2-Decoders 15 eine Grafik zu legen, und gleichzeitig auf dem Monitor des Rechners 1 weiter in einem Programm zu arbeiten.

Eine besonders vorteilhafte Ausführung besteht in der Integration des Satellitenempfängers 13 mit dem Rechner 1, der Speichereinheit 14, dem MPEG-2-Decoder 15 und der videodienstleisterspezifischen Wiedergabesoftware 16 in einer Settop-Box 19 mit (Modem/ISDN)-Netzanschluß. Dadurch wird zusätzlich zu interaktivem Fernsehen und TV-Shopping der individuelle Bezug von Videosequenzen 5 und deren Wiedergabe ermöglicht.

Insbesondere für den commerziellen Bereich interessant ist die Möglichkeit der Kopplung von Videosequenzen 5 mit Commercials. Ein Videodienstleister 2 fungiert hierbei gleichzeitig als Commercialprovider und ordnet den für verschiedene Empfänger nach Abforderung zusammengestellten Videosequenzen 5 eine Anzahl von Commercials bei, wobei jedoch auch eine separate Übertragung von Commercials möglich ist. Die Übertragung, Speicherung und Wiedergabe erfolgt prinzipiell unter den gleichen Bedingungen wie für die Videosequenzen 5. Der Empfänger kann aus den auf der Speichereinheit 14 abgelegten Videosequenzen 5 frei wählen und hieraus individuell ein Programm zusammenstellen. Diesem Programm werden für eine vom Videodienstleister vorgegebene Zeiteinheit eine bestimmte, vom Empfänger nicht beeinflußbare, Anzahl von Commercials dynamisch beigeordnet. Die Wiedergabe erfolgt zwischen den beispielsweise Musikvideoclips in unregelmäßiger Abfolge.

### Verwendete Bezugszeichen

- 1: Rechner
- 2: Videodienstleister
- 3: Netz
- 4: empfängerspezifische Identifizierung
- 5: Videosequenz
- 6: Breitbandverbindung
- 7: MPEG-2-File
- 8: Satellitensender
- 9: Paket
- 10: Daten
- 11: Kopfinformationen
- 12: Satellit
- 13: Satellitenempfänger
- 14: Speichereinheit
- 15: MPEG-2-Decoder
- 16: videodienstleisterspezifische Wiedergabesoftware
- 17: Schlüssel
- 18: Videosignal
- 19: Settop-Box

## Patentansprüche

1. Verfahren für die Zustellung abgeforderter Videosequenzen, welche ein Empfänger bei einem Videodienstleister (2) vorab bestellte, über Satelliten an einen Rechner (1) des Empfängers, welcher mit einem Satellitenempfänger (13) verbunden ist, wobei
a) dem Rechner (1) eine empfängerspezifische Identifizierung (4) zur rechnergestützten Identifizierung des Empfängers zugeordnet wird,
b) die Videosequenz (5) innerhalb eines paketvermittelnden Datendienstes des Satellitensenders (8) als Daten (10) einzelner Pakete (9) zerlegt über den Satelliten (12) dem Satellitenempfänger (13) zugestellt wird,
c) die empfängerspezifische Identifizierung (4) auf Basis der Kopfinformationen (11) der Pakete (9) überprüft wird und im Fall der Berechtigung die Videosequenz (5) auf der Speichereinheit (15) des Rechners (1) gespeichert wird,
**dadurch gekennzeichnet, dass**
d) die Videosequenzen (5) entsprechend dem MPEG-2 Standard kodiert werden,
e) die Videosequenzen (5) in einer verschlüsselten Form gespeichert werden,
f) die Echtzeitdekodierung des die Videosequenz (5) darstellenden, gespeicherten MPEG-2-Files (7) in ein Videosignal (18) durch einen MPEG-2-Decoder (15) des Rechners (1) erfolgt, wobei die Entschlüsselung des MPEG-2-Files in Echtzeit mittels eines videodienstleisterspezifischen Schlüssels (17) erfolgt.

2. Verfahren nach Anspruch 1, **dadurch gekennzeichnet, dass** die Echtzeitdekodierung des auf der Speichereinheit (15) abgelegten MPEG-2-Files (7) in ein Videosignal (19) mittels der videodienstleisterspezifischen Wiedergabesoftware (16) erfolgt, ohne unverschlüsselte Videosequenzen (5) zu speichern.

3. Verfahren nach einem der Ansprüche 1 oder 2, **dadurch gekennzeichnet,**
**dass** zur Echtzeitentschlüsselung der im MPEG-2 Standard beschriebene spezielle Chiffrieralgorithmus benutzt wird.

4. Verfahren nach einem der Ansprüche 1 bis 3, **dadurch gekennzeichnet,**
**dass** der videodienstleisterspezifische Schlüssel (17) temporär aus der empfängerspezifischen Identifizierung (4) und einem Public-Key berechnet wird.

5. Verfahren nach einem der Ansprüche 1 bis 4, **dadurch gekennzeichnet,**
**dass** der MPEG-2-Decoder (15) die Ausgabe der Videosequenz (5) als Videosignal (18) bezüglich des Monitorsignals des Rechners (1) entkoppelt durchführt.

6. Verfahren nach einem der Ansprüche 1 bis 5, **dadurch gekennzeichnet,**
**dass** die zur Speicherung erforderliche Speicherkapazität der Speichereinheit (15) vorab bei der Bestellung auf Verfügbarkeit überprüft und/oder reserviert wird.

7. Verfahren nach einem der Ansprüche 1 bis 6, **dadurch gekennzeichnet,**
**dass** zur Ermöglichung einer individuellen Auswahl bei der Bestellung eine Vorschau des Inhalts der Videosequenzen über ein Netz, beispielsweise das Internet, im MPEG-1-Format auf den Rechner übertragen wird.

8. Verfahren nach einem der Ansprüche 1 bis 7, **dadurch gekennzeichnet,**
**dass** den Videosequenzen (5) vom Empfänger unbeeinflußbare Commercials beigeordnet werden.

9. Verfahren nach einem der Ansprüche 1 bis 8, **dadurch gekennzeichnet,**
**dass** einem durch freie Auswahl des Empfängers aus gespeicherten Videosequenzen (5) individuell zusammengestellten Programm für eine vorgegebene Zeiteinheit eine bestimmte Anzahl von Commercials beigeordnet wird.

10. Datenverarbeitungsprogramm für einen mit einem Satellitenempfänger gekoppelten Rechner, der eine Speichereinheit, temporären Speicher und einen MPEG-2-Decoder aufweist und der über ein Netz mit einem Videodienstleister verbunden ist, wobei der Quellcode des Datenverarbeitungsprogramms folgende Software-Module umfaßt:
a) ein Auswahlmodul, mit dem der berechtigte Empfänger aus dem Angebot des Videodienstleisters einzelne Videosequenzen auswählt;
b) ein Empfangsmodul, welches anhand einer empfängerspezifischen Identifizierung (4) jeweils über die Kopfinformation (11) von über einen Satelliten übertragenen Datenpaketen die für den Rechner bestimmten Daten (10) ermittelt, die Daten (10) aller Pakete (9) verknüpft und auf der Speichereinheit abspeichert;
c) ein Wiedergabemodul, welches die Dekodierung der Videosequenz (5) in Echtzeit vornimmt und diese als Videosignal ausgibt; und bei Ausführung des Programms auf dem Rechner die Schritte der empfängerspezifischen Identifizierung (4); der Abforderung der Videosequenz (5); der Überprüfung der empfängerspezifischen Identifizierung (4) auf Basis der Kopfinformationen (11) der Pakete (9) bei Empfang der Daten (10), der Speicherung der Videosequenz (5) auf der Speichereinheit (15) des Rechners (1) im Fall der Berechtigung; der Echtzeitdekodierung des die Videosequenz (5) darstellenden, gespeicherten MPEG-2-Files (7) in ein Videosignal (18) durch einen MPEG-2-Decoder (15) des Rechners (1) ausgeführt werden,
**dadurch gekennzeichnet, dass**
d) die Videosequenz (5) durch das Empfangsmodul in einer verschlüsselten Form auf der Speichereinheit abgespeichert wird und
e) das Wiedergabemodul bei der Echtzeitdekodierung des die Videosequenz (5) darstellenden, gespeicherten MPEG-2-Files (7) in ein Videosignal (18) die Entschlüsselung des MPEG-2-Files mittels eines videodienstleisterspezifischen Schlüssels (17) durchführt.

11. Datenverarbeitungsprogramm nach Anspruch 10, **dadurch gekennzeichnet,**
**dass** die Entschlüsselung und Dekodierung der Videosequenz durch das Wiedergabemodul ohne Abspeicherung unverschlüsselter Videosequenzen erfolgt.

12. Datenverarbeitungsprogramm nach Anspruch 10 oder 11, **dadurch gekennzeichnet,**
**dass** die Ausgabe der Videosequenz als Videosignal von dem Monitorsignal des Rechners entkoppelt erfolgt.

13. Datenverarbeitungsprogramm nach einem der Ansprüche 10 bis 12, **dadurch gekennzeichnet,**
**dass** es bei der Ausgabe der Videosequenz dem Videosignal vom Empfänger unbeeinflußbare Commercials beiordnet.

14. Datenverarbeitungsprogramm nach einem der Ansprüche 10 bis 13, **dadurch gekennzeichnet,**
**dass** es einem durch freie Auswahl des Empfängers aus gespeicherten Videosequenzen (5) individuell zusammengestellten Programm für eine vorgegebene Zeiteinheit eine bestimmte Anzahl von Commercials beiordnet.

15. Mit einem Satellitenempfänger gekoppelter Rechner, der eine Speichereinheit, temporären Speicher und einen MPEG-2-Decoder aufweist und der über ein Netz mit einem Videodienstleister verbunden ist, **gekennzeichnet durch** ein in seiner Speichereinheit abgespeichertes Datenverarbeitungsprogramm nach einem der vorangehenden Ansprüche 10 bis 15.

16. Rechner nach Anspruch 15, **dadurch gekennzeichnet, dass** er zusammen mit dem Satellitenempfänger in einer Settop-Box (19) mit Netzanschluß integriert ist.

## Claims

1. Method of delivering requested video sequences, which a receiver ordered in advance from a video service provider (2), via satellite to a computer (1) of the receiver which is connected to a satellite receiver (13), wherein
a) the computer (1) is allocated a receiver-specific identification (4) for the computer-assisted identification of the receiver,
b) the video sequence (5) within a packet-switching data service of the satellite transmitter (8) is broken down as data (10) of individual packets (9) and is delivered via the satellite (12) to the satellite receiver (13),
c) the receiver-specific identification (4) is verified on the basis of the header information (11) of the packets (9) and in the case of authorisation the video sequence (5) is stored in the memory unit (15) of the computer,
**characterised in that**
d) the video sequences (5) are encoded according to the MPEG-2 standard,
e) the video sequences (5) are stored in an encrypted form,
f) the real-time decoding of the stored MPEG-2 file, which represents the video sequence (5), into a video signal (18) is performed by means of an MPEG-2 decoder (15) of the computer (1); wherein the decryption of the MPEG-2 file is performed in real-time by means of a video service provider-specific key (17).

2. Method according to claim 1, **characterised in that** the real-time decoding of the MPEG-2 file (7), which is stored in the memory unit (15), into a video signal (19) is performed by means of the video service provider-specific reproduction software (16), without non-encrypted video sequences (5).

3. Method according to any one of claims 1 or 2, **characterised in that** for the purpose real-time decryption, the specific encryption algorithm described in the MPEG-2 standard is used.

4. Method according to any one of claims 1 to 3, **characterised in that** the video service provider-specific key (17) is calculated temporarily from the receiver-specific identification (4) and a public key.

5. Method according to any one of claims 1 to 4, **characterised in that** the MPEG-2 decoder (15) executes the output of the video sequence (5) as a video signal (18) in a decoupled manner with respect to the monitor signal of the computer (1).

6. Method according to any one of claims 1 to 5, **characterised in that** the memory capacity of the memory unit (15) required for storage purposes is checked for availability and/or reserved in advance during the ordering procedure.

7. Method according to any one of claims 1 to 6, **characterised in that** in order to enable an individual selection during the ordering procedure, a preview of the content of the video sequences is transmitted in the MPEG-1 format to the computer via a network, e.g. the Internet.

8. Method according to any one of claims 1 to 7, **characterised in that** the video sequences (5) are assigned commercials which cannot be influenced by the receiver.

9. Method according to any one of claims 1 to 8, **characterised in that** a specific number of commercials is assigned for a specified unit of time to a program which is compiled individually by free selection of the receiver from stored video sequences (5).

10. Data processing program for a computer which is coupled to a satellite receiver and which comprises a memory unit, a temporary memory and an MPEG-2 decoder and which is connected to a video service provider via a network, wherein the source code of the data processing program comprises the following software-modules:
a) a selection module which enables the authorised receiver to choose individual video sequences from the selection offered by the video service provider;
b) a reception module which determines the data (10) intended for the computer with the aid of a receiver-specific identification (4) in each case via the header information (11) of data packets transmitted via satellite and said reception module links the data (10) of all packets (9) and stores same in the memory unit;
c) a reproduction module which decodes the video sequence (5) in real-time and outputs same as a video signal;
and upon execution of the program on the computer the following steps are performed: receiver-specific identification (4); requesting the video sequence (5); verifying the receiver-specific identification (4) on the basis of the header information (11) of the packets (9) upon reception of the data (10); storing the video sequence (5) in the memory unit (15) of the computer (1) in the case of authorisation; real-time decoding of the stored MPEG-2 file (7), which represents the video sequence (5), into a video signal (18) by means of an MPEG-2 decoder (15) of the computer (1),
**characterised in that**
d) the video sequence (5) is stored by the reception module in an encrypted form in the memory unit and
e) during the real-time decoding of the stored MPEG-2 file (7), which represents the video sequence (5), into a video signal (18), the reproduction module decrypts the MPEG-2 file by means of a video service provider-specific key (17).

11. Data processing program according to claim 10, **characterised in that** the decryption and decoding of the video sequence are performed by the reproduction module without storing non-encrypted video sequences.

12. Data processing program according to claim 10 or 11, **characterised in that** the output of the video sequence as a video signal is performed in a decoupled manner from the monitor signal of the computer.

13. Data processing program according to any one of claims 10 to 12, **characterised in that** during the output of the video sequence said data processing program assigns commercials, which cannot be influenced by the receiver, to the video signal.

14. Data processing program according to any one of claims 10 to 13, **characterised in that** it assigns a specific number of commercials for a specified unit of time to a program which is compiled individually by free selection of the receiver from stored video sequences (5).

15. Computer which is coupled to a satellite receiver and which comprises a memory unit, a temporary memory and an MPEG-2 decoder and which is connected to a video service provider via a network, **characterised by** a data processing program, which is stored in its memory unit, according to any one of the preceding claims 10 to 15.

16. Computer according to claim 15, **characterised in that** together with the satellite receiver said computer is integrated in a set-top box (19) comprising a network connection.

## Revendications

1. Procédé pour distribuer des séquences vidéo demandées par satellites à un receveur ayant d'abord passé commande chez un prestataire de services vidéo (2) relié par satellites à un ordinateur (1) du receveur relié à un récepteur de satellites (13), selon lequel
a) à l'ordinateur (1) est associé une identification spécifique (4) du receveur pour permettre une identification, assistée par ordinateur, du receveur,
b) la séquence vidéo décomposée en données (10) de paquets individuels (9) à l'intérieur d'un service de données à commutation par paquets de l'émetteur du satellite (8), est délivrée par les satellites (12) au récepteur de satellites (13),
c) l'identification (4) spécifique du receveur est contrôlée sur la base des informations de tête (11) des paquets (9) et la séquence vidéo, quand elle est autorisée est enregistrée dans l'unité de mémoire (15) de l'ordinateur (1),
**caractérisé en ce que**
d) les séquences vidéo (5) sont codées selon le standard MPEG-2,
e) les séquences vidéo (5) sont mémorisées sous forme chiffrée,
f) le décodage en temps réel du fichier MPEG-2 (7) mémorisé, représentant la séquence vidéo (5), pour donner un signal vidéo (18) est effectué par un décodeur de MPEG-2 (15) de l'ordinateur (1), ce décodage en temps réel s'effectuant en utilisant une clé (17) spécifique au prestataire de services vidéo.

2. Procédé selon la revendication 1,
**caractérisé en ce que**
le décodage de temps réel du fichier MPEG-2 (7) déposé dans l'unité de mémoire (15), pour donner un signal vidéo (19) s'effectue au moyen du software de reproduction (16) spécifique au prestataire de services vidéo, sans mise en mémoire de séquences vidéo (5) non chiffrées.

3. Procédé selon l'une quelconque des revendications 1 ou 2,
**caractérisé en ce que**
pour déchiffrer en temps réel, on utilise l'algorithme de chiffrage spécifique décrit dans le standard MPEG-2.

4. Procédé selon l'une quelconque des revendications 1 à 3,
**caractérisé en ce que**
la clé (17) spécifique au prestataire de services vidéo est temporairement calculée à partir de l'identification (4) spécifique du receveur et d'une clé publique.

5. procédés selon l'une quelconque des revendications 1 à 4,
**caractérisé en ce que**
le décodeur MPEG-2 (15) délivre la séquence vidéo (5) sous la forme d'un signal vidéo (18) découplé par rapport au signal du moniteur de l'ordinateur (1).

6. Procédé selon l'une quelconque des revendications 1 à 5,
**caractérisé en ce que**
la capacité de l'unité de mémoire (15) nécessaire pour la mémorisation est contrôlée et/ou réservée d'abord lors de la commande de disponibilité.

7. Procédé selon l'une quelconque des revendications 1 à 6,
**caractérisé en ce que**
pour permettre un choix individuel lors de la commande, un aperçu du contenu de la séquence vidéo est transmis par l'intermédiaire d'un réseau, par exemple le réseau Internet, au calculateur sous le format MPEG-1.

8. Procédé selon l'une quelconque des revendications 1 à 7,
**caractérisé en ce qu**
aux séquences vidéo (5) sont adjoints des messages commerciaux qui ne peuvent être influencés par le récepteur.

9. Procédé selon l'une quelconque des revendications 1 à 8,
**caractérisé en ce qu'**
à un programme assemblé individuellement selon le choix effectué librement par le receveur à partir de séquences vidéo (5) mémorisées, est associé, pour une unité de temps donnée à l'avance, un nombre défini de messages commerciaux.

10. Programme de traitement de données pour un ordinateur accouplé à un récepteur de satellites, qui possède une unité de mémoire, des mémoires temporaires, un décodeur MPEG-2 et qui est relié par un réseau à un prestataire de services vidéo, le code source du programme de traitement de données comprenant les modules de software suivants :
a) un module de sélection, par lequel le receveur autorisé choisit différentes séquences vidéo dans l'offre du prestataire de services vidéo,
b) un module de réception qui, au moyen d'une identification (4) spécifique au receveur, chaque fols par l'intermédiaire de l'information de tête (11) à partir de paquets de données transmis par satellites établit les données (10) définies pour l'ordinateur, connecte les données (10) de tous les paquets (9) et les stocke dans l'unité de mémoire.
c) un module de reproduction, qui exécute en temps réel le décodage de la séquence vidéo (5) et la délivre sous forme de signal vidéo.
qui, lors de l'exécution du programme sur l'ordinateur effectue les étapes suivantes : identification (4) spécifique de receveur, demande de la vidéo séquence (5), contrôle de l'identification (4) spécifique du receveur sur la base des informations de tête (11) des paquets (9) lors de la réception des données (10), enregistrement de la séquence vidéo (5) dans l'unité de mémoire (15) de l'ordinateur (1) en cas d'autorisation, décodage en temps réel du fichier (7) MPEG-2 mis en mémoire, représentant la séquence vidéo (5), en utilisant un décodeur (15) MPEG-2 de l'ordinateur (1) pour donner un signal vidéo (18),
**caractérisé en ce que**
d) la séquence vidéo (5) est, par le module de réception, enregistrée sous une forme chiffrée, dans l'unité de mémoire et,
e) le module de reproduction, lors du décodage en temps réel du fichier (7) MPEG-2 mis en mémoire, représentant la séquence vidéo (5) effectue pour donneur un signal vidéo (18) le déchiffrage du fichier MPEG-2 en utilisant une clé (17) spécifique au prestataire de services vidéo.

11. Programme selon la revendication 10,
**caractérisé en ce que**
le déchiffrage et le décodage de la séquence vidéo sont effectués par le module de reproduction sans enregistrement de séquences vidéo non chiffrées.

12. Programme selon l'une quelconque des revendications 10 ou 11,
**caractérisé en ce que**
la sortie de la séquence vidéo a lieu sous forme d'un signal vidéo qui est découplé du signal du moniteur de l'ordinateur.

13. Programme selon l'une quelconque des revendications 10 à 12,
**caractérisé en ce que**
lors de la sorite de la séquence vidéo, au signal vidéo sont joints des messages commerciaux qui ne peuvent être influencés par le récepteur.

14. Programme selon l'une quelconque des revendications 10 à 13,
**caractérisé en ce qu'**
il associe à un programme assemblé individuellement selon le choix effectué par le receveur à partir de séquences vidéo (5) mémorisées, pour une unité de temps donnée à l'avance, un nombre défini de messages commerciaux.

15. Ordinateur accouplé à un récepteur de satellites, qui comporte une unité de mémoire, des mémoires temporaires et un décodeur MPEG-2 et qui est relié par un réseau à un prestataire de services vidéo,
**caractérisé en ce que**
dans son unité de mémoire est enregistré un programme de traitement de données selon l'une quelconque des revendications 10 à 14.

16. Ordinateur selon la revendication 15,
**caractérisé en ce qu'**
il est, avec le récepteur de satellites, intégré dans un Settop-Box (19) avec raccordement à un réseau.
